# EUROPEAN PATENT APPLICATION

(11) **EP 3 232 160 A1**
(43) Date of publication of application: **18.10.2017**
(21) Application number: 15868173.4
(22) Date of filing: 06.10.2015
(51) Int. Cl.: G01C 21/36, B60R 16/02, G06F 3/01, G06F 3/16, G10L 15/00, G10L 15/06, G10L 15/22

(54) **VOICE INPUT ASSISTANCE DEVICE, VOICE INPUT ASSISTANCE SYSTEM, AND VOICE INPUT METHOD**

(30) Priority: 12.12.2014 JP 2014251442
(71) Applicant: Clarion Co., Ltd., Saitama-shi, Saitama 330-0081 (JP)
(72) Inventor: SHIMIZU Atsushi, Tokyo 100-8280 (JP); YAMAGUCHI Takashi, Saitama-shi Saitama 330-0081 (JP); NAGAI Yasushi, Saitama-shi Saitama 330-0081 (JP)
(74) Representative: MERH-IP Matias Erny Reichl Hoffmann Patentanwälte PartG mbB
(86) International application number: PCT/JP2015/078339
(87) International publication number: WO 2016/092946

(57) **Abstract**

Provided is a technology for enabling an operation to be conducted through use of words shortened more for an operation item estimated to be desired stronger. A voice input assistance device includes: a shortened-phrase storing unit configured to store an operation item and a shortened phrase corresponding to a desirability of the operation item in association with each other; a desirability estimation unit configured to estimate the desirability of each operation item through use of a predetermined index, and to identify the shortened phrase from the shortened-phrase storing unit based on the desirability; and an output processing unit configured to present the shortened phrase identified by the desirability estimation unit.

## Description

### Technical Field

The present invention relates to a technology for a voice input assistance device, a voice input assistance system, and a voice input method. The present invention claims priority from Japanese Patent Application No. 2014-251442 filed on December 12, 2014, the content of which is hereby incorporated by reference into this application in designated states that allow incorporation by reference of literature.

### Background Art

An example of background art in this technical field is disclosed in Japanese Patent Laid-open Publication No. 2002-055694 (Patent Literature 1). This publication includes the description "A voice-operated device, comprising: an operation switch configured to enable a voice operation of an apparatus; storage means for storing a usable operation voice; display means for selectively displaying the operation voice stored in the storage means; and recognition means for recognizing an operation voice with respect to the apparatus, wherein: the storage means is configured to store acceptable operation voice data in each layer and the number of times of use for each operation voice in each layer; the display means is configured to display, on a screen, an operation voice menu obtained by adding a symbol to the operation voice in descending order of the number of times of use for each layer when the operation switch is turned on and/or when the recognition means recognizes the operation voice in one layer; and the recognition means is capable of recognizing a voice of the symbol also as the operation voice to which the symbol is added.

### Citation List

### Patent Literature

[PTL 1] Japanese Patent Laid-open Publication No. 2002-055694

### Summary of Invention

### Technical Problem

In the above-mentioned technology, it is necessary for a user to conduct an operation by uttering the symbol, which is not a natural language, and to confirm the symbol by visually observing the screen in order to select the symbol to be uttered.

The present invention has been made to solve the above-mentioned problem, and has an object to enable an operation to be conducted through use of words shortened more for an operation item estimated to be desired stronger.

### Solution to Problem

This application includes a plurality of means for solving at least part of the above-mentioned problem, and an example of the plurality of means is as follows. In order to solve the above-mentioned problem, according to one embodiment of the present invention, there is provided a voice input assistance device, including: a shortened-phrase storing unit configured to store an operation item and a shortened phrase corresponding to a desirability of the operation item in association with each other; a desirability estimation unit configured to estimate the desirability of each operation item through use of a predetermined index, and to identify the shortened phrase from the shortened-phrase storing unit based on the desirability; and an output processing unit configured to present the shortened phrase identified by the desirability estimation unit.

### Advantageous Effects of Invention

According to the present invention, it is possible to enable the operation to be conducted through use of the words shortened more for the operation item estimated to be desired stronger. Problems, configurations, and effects other than those described above are clarified by the following description of an embodiment of the present invention.

### Brief Description of Drawings

FIG. 1 is a diagram for illustrating an example of a configuration of a voice input assistance system according to an embodiment of the present invention.
FIG. 2 is a diagram for illustrating an example of a configuration of a server apparatus.
FIG. 3 is a diagram for illustrating an example of configurations of a voice input assistance device and a peripheral device.
FIG. 4 is a table for showing a data structure of an utterance track record storing unit.
FIG. 5 is a table for showing a data structure of a shortened-phrase storing unit.
FIG. 6 is a table for showing a data structure of an operation instruction phrase storing unit.
FIG. 7 is a table for showing a data structure of an application usage state storing unit.
FIG. 8 is a diagram for illustrating hardware configurations that form the voice input assistance system.
FIG. 9 is a diagram for illustrating a processing flow of desirability estimation processing.
FIG. 10 is a diagram for illustrating a processing flow of shortened-phrase presentation processing.
FIG. 11 is a diagram for illustrating an example of a voice-recognized shortened-phrase display screen.
FIG. 12 is a diagram for illustrating a processing flow of voice recognition processing.
FIG. 13 is a diagram for illustrating an example of a voice recognition display screen.

### Description of Embodiments

An example of a voice input assistance system 1 to which an embodiment of the present invention is applied is now described with reference to the drawings.

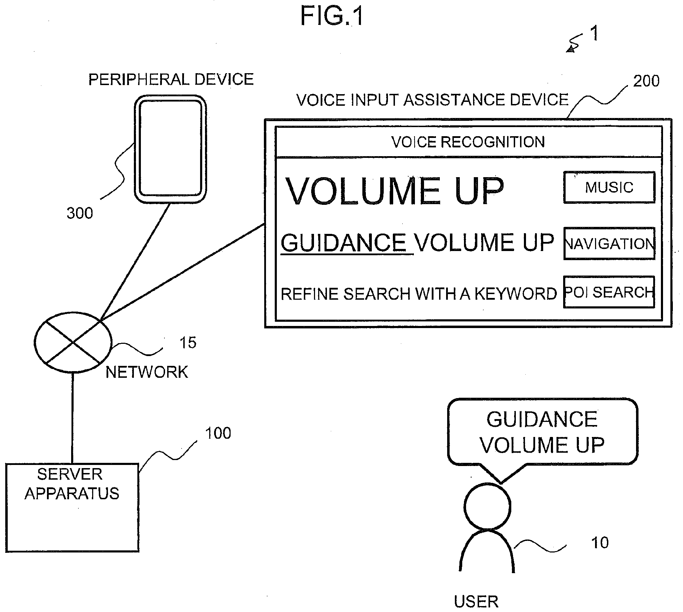

FIG. 1 is a diagram for illustrating an example of an overall configuration of the voice input assistance system 1 to which a first embodiment of the present invention is applied. In the voice input assistance system 1, as illustrated in FIG. 1, a server apparatus 100, a voice input assistance device 200 that can communicate to/from the server apparatus 100 through a network 15, for example, the Internet, and a peripheral device 300 communicably connected to the voice input assistance device 200 in a wired or wireless manner can be operated in coordination with one another.

In this embodiment, the voice input assistance device 200 and the peripheral device 300 include, for example, a wireless network router, a smartphone terminal, a so-called tablet terminal, or other such general mobile device that is communicably connected to the Internet or the like and configured to operate independently. The voice input assistance device 200 also includes, for example, a navigation device mounted to a moving object or a portable navigation device mounted to a moving object, which can also operate independently even when being detached therefrom.

In this embodiment, by uttering a shortened phrase for voice input presented by the voice input assistance device 200, a user 10 can operate each kind of operation associated with a shortened phrase and having a phrase before being shortened through use of an input/output interface. In this embodiment, the user 10 can not only conduct operation of the voice input assistance device 200 through the use of the input/output interface of the voice input assistance device 200 but also conduct an operation of each kind of software, for example, music player application software, provided to the peripheral device 300 through use of an input/output interface including a voice input interface of the voice input assistance device 200.

The network 15 is a wireless communication channel, for example, a wireless local area network (LAN) or Bluetooth (trademark). The voice input assistance device 200 and the peripheral device 300 may be configured to communicate to/from each other not only through the network 15 but also through a wired communication channel, for example, a universal serial bus (USB), or the communication channel, for example, the wireless LAN or Bluetooth.

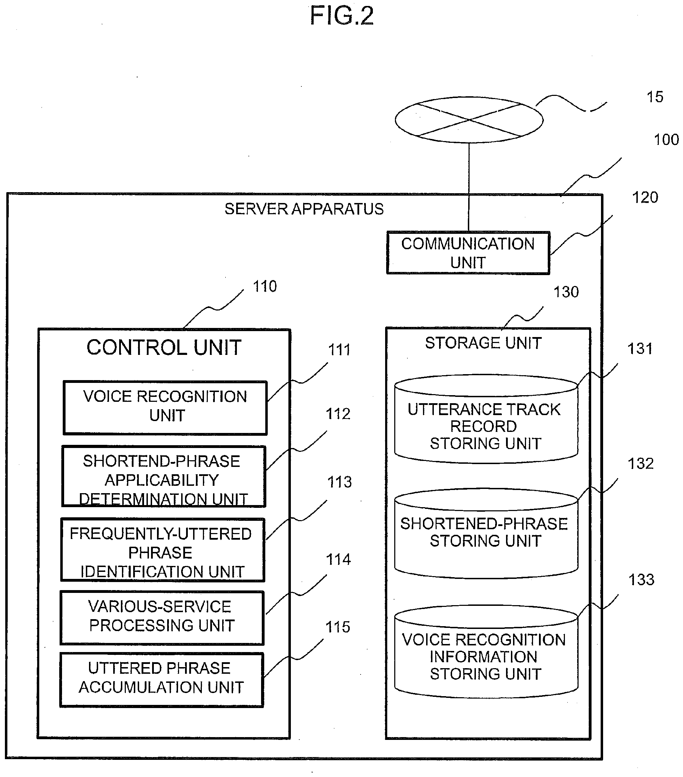

FIG. 2 is a diagram for illustrating an example of a configuration of the server apparatus 100 according to this embodiment. The server apparatus 100 includes a control unit 110, a communication unit 120, and a storage unit 130. The control unit 110 includes a voice recognition unit 111, a shortened-phrase applicability determination unit 112, a frequently-uttered phrase identification unit 113, a various-service processing unit 114, and an uttered phrase accumulation unit 115. The storage unit 130 includes an utterance track record storing unit 131, a shortened-phrase storing unit 132, and a voice recognition information storing unit 133.

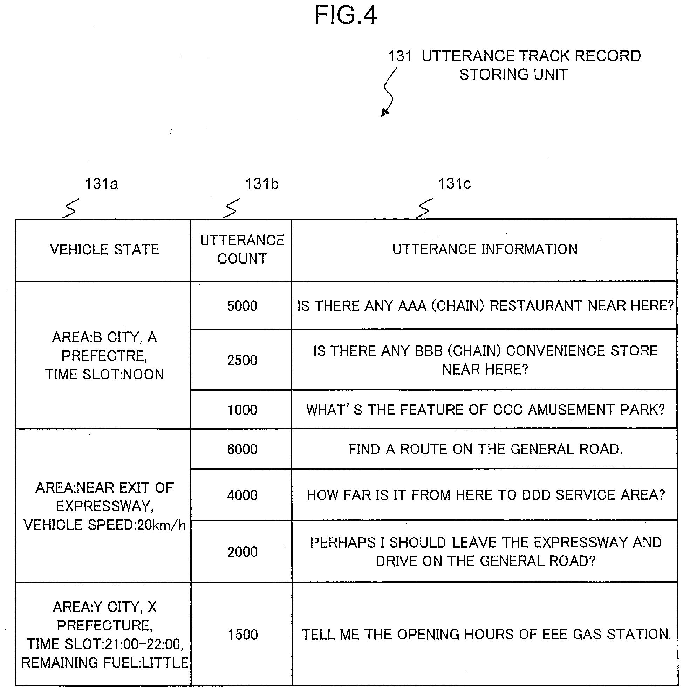

FIG. 4 is a table for showing a data structure of the utterance track record storing unit 131. The utterance track record storing unit 131 includes a vehicle state 131a, an utterance count 131b, and utterance information 131c. The vehicle state 131a is information for indicating a state of a vehicle to which the voice input assistance device 200 belongs. For example, the vehicle state 131a includes information for identifying the area to which a position of the vehicle belongs or information including a time slot identified by the vehicle.

The utterance count 131b is information for indicating the number of times that an utterance relating to the utterance information 131c is accumulated in a vehicle state identified in the vehicle state 131a. The utterance information 131c is information obtained by converting an uttered sentence into text.

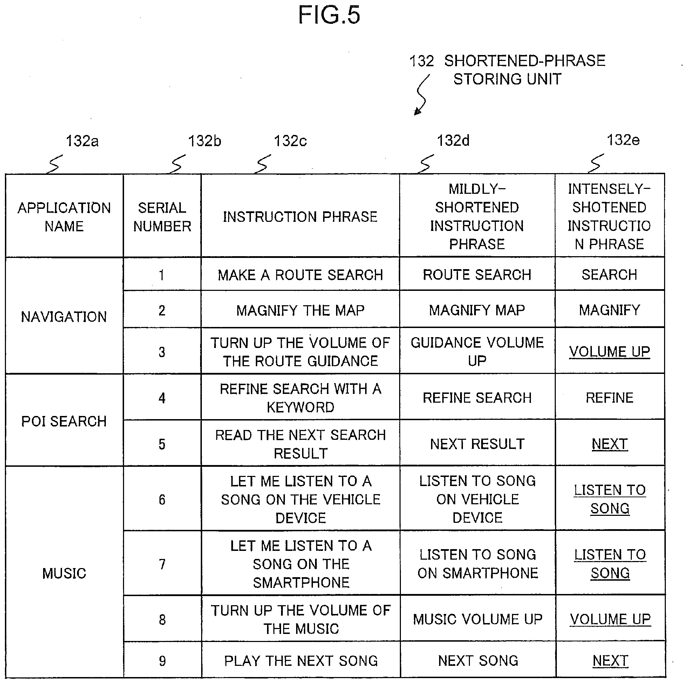

FIG. 5 is a table for showing a data structure of the shortened-phrase storing unit 132. The shortened-phrase storing unit 132 includes an application name 132a, a serial number 132b, an instruction phrase 132c, a mildly-shortened instruction phrase 132d, and an intensely-shortened instruction phrase 132e.

The application name 132a is information for identifying a name of application software. The serial number 132b is unique information assigned to the instruction phrase 132c. The instruction phrase 132c is a predefined phrase to be used for conducting an operation through the voice input. The mildly-shortened instruction phrase 132d is an instruction phrase obtained by mildly shortening an instruction phrase relating to the instruction phrase 132c. The wording "mildly" means that a degree of shortening is smaller than that of an instruction phrase relating to the intensely-shortened instruction phrase 132e. For example, the mildly-shortened instruction phrase 132d is obtained by extracting at least a noun or a verb from the instruction phrase and setting the noun or the verb as an operable item, and the mildly-shortened instruction phrase "music volume up" or the like is conceivable for the instruction phrase "turn up the volume of the music".

The intensely-shortened instruction phrase 132e is an instruction phrase obtained by intensely shortening an instruction phrase relating to the instruction phrase 132c. The wording "intensely" means that a degree of shortening is larger than that of an instruction phrase relating to the mildly-shortened instruction phrase 132d. For example, the intensely-shortened instruction phrase 132e is obtained by extracting a phrase representing a manner of an action from the instruction phrase and setting the phrase as an operable item, and the intensely-shortened instruction phrase "volume up" or the like is conceivable for the instruction phrase "turn up the volume".

A mild level and an intense level of the above-mentioned degree of shortening are merely an example, and it suffices that the instruction phrase has a simpler expression as the degree of shortening becomes larger, for example, from the mild level to the intense level. Therefore, the shortening is not strictly limited to the omission of a noun, a verb, or a phrase representing a manner of an action, and may be appropriately defined in accordance with use of specific omission, an abbreviation, or the like that is conceivable for each instruction phrase and each language in actuality, for example, may involve the omission of an object. Further, the instruction phrase and the shortened phrase may be updated based on information distributed from an external device, or the shortened phrase may be generated through the shortening corresponding to the instruction phrase at a time of execution.

The description is continued with reference back to FIG. 2. The voice recognition unit 111 is configured to recognize a language included in voice information through use of the information for general voice recognition which is stored in the voice recognition information storing unit 133. Specifically, the voice recognition unit 111 receives an uttered voice of a user including a shortened phrase (hereinafter referred to as "user-uttered voice (shortened phrase)"), a shortened-phrase-applicable operation item list, and vehicle information from the voice input assistance device 200.

The voice recognition unit 111 also converts the user-uttered voice (shortened phrase) into a user-uttered phrase (shortened phrase) being data having a text format. Then, the voice recognition unit 111 passes the user-uttered phrase (shortened phrase) and the shortened-phrase-applicable operation item list to the shortened-phrase applicability determination unit 112. The voice recognition unit 111 also passes the user-uttered phrase (shortened phrase) and the vehicle information to the uttered phrase accumulation unit 115.

The shortened-phrase applicability determination unit 112 is configured to refer to the received user-uttered phrase (shortened phrase) and the received shortened-phrase-applicable operation item list to determine whether or not the user-uttered phrase (shortened phrase) corresponds to any one of shortened phrases within the list. When the user-uttered phrase (shortened phrase) corresponds to any one of the shortened phrases, the user-uttered phrase (shortened phrase) is converted into an operation instruction phrase (unshortened) corresponding thereto. When the user-uttered phrase (shortened phrase) corresponds to none of the shortened phrases, the user-uttered phrase (shortened phrase) is converted by being assumed as the operation instruction phrase (unshortened). Then, the shortened-phrase applicability determination unit 112 transmits the operation instruction phrase (unshortened) to the voice input assistance device 200.

The frequently-uttered phrase identification unit 113 is configured to refer to the utterance track record storing unit 131 when receiving the vehicle information transmitted from the voice input assistance device 200, to thereby extract an uttered phrase that has been uttered by a large number of users in relation to vehicle information matching or similar to the received vehicle information. For example, the frequently-uttered phrase identification unit 113 extracts an uttered phrase having a large utterance count. Further, the frequently-uttered phrase identification unit 113 transmits the extracted uttered phrase to the voice input assistance device 200 along with the utterance count.

The various-service processing unit 114 is configured to execute an engine or service configured to execute each kind of service provided by the server apparatus 100. For example, the various-service processing unit 114 receives dialogue-type input in a voice dialogue service or the like, and executes a point-of-interest (POI) search service for presenting a spot or facility being a POI or other such service.

The uttered phrase accumulation unit 115 is configured to receive the user-uttered phrase (unshortened) and the vehicle information from the voice recognition unit 111. The uttered phrase accumulation unit 115 is also configured to store the user-uttered phrase (unshortened) in association with the vehicle information when the same vehicle information as the received vehicle information has already been stored in the utterance track record storing unit 131.

The communication unit 120 is configured to communicate to/from another device connected to the network 15, for example, the Internet. In other words, it can be said that the communication unit 120 allows the voice recognition unit 111 and the various-service processing unit 114 to receive information from another device. Meanwhile, the communication unit 120 also allows the shortened-phrase applicability determination unit 112, the frequently-uttered phrase identification unit 113, and the various-service processing unit 114 to transmit information to another device.

An outline of the configuration of the server apparatus 100 has been described above. The server apparatus 100 is typically a general-purpose computer or the like, but the present invention is not limited thereto, and the server apparatus 100 may be a personal computer device, a mobile phone terminal, a tablet terminal, a personal digital assistant (PDA), or other such electronic information terminal.

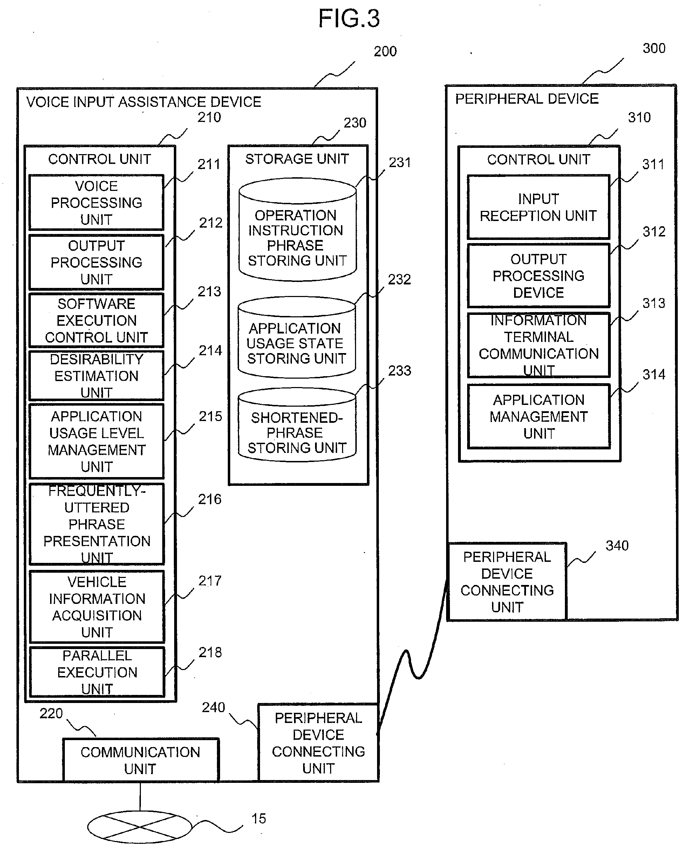

FIG. 3 is an illustration of configurations of the voice input assistance device 200 and the peripheral device 300 according to this embodiment. The voice input assistance device 200 includes a control unit 210, a communication unit 220, a storage unit 230, and a peripheral device connecting unit 240. The control unit 210 includes a voice processing unit 211, an output processing unit 212, a software execution control unit 213, a desirability estimation unit 214, an application usage level management unit 215, a frequently-uttered phrase presentation unit 216, a vehicle information acquisition unit 217, and a parallel execution unit 218. The storage unit 230 includes an operation instruction phrase storing unit 231, an application usage state storing unit 232, and a shortened-phrase storing unit 233.

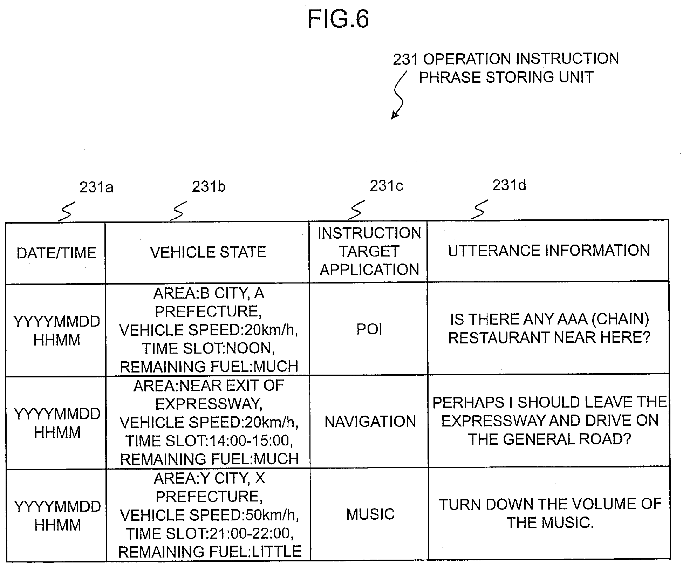

FIG. 6 is a table for showing a data structure of the operation instruction phrase storing unit 231. The operation instruction phrase storing unit 231 includes a date/time 231a for identifying a date/time at which an utterance is given, a vehicle state 231b for identifying a state of a vehicle exhibited when the utterance is given, an instruction target application 231c for identifying application software targeted by the utterance, and utterance information 231d representing a linguistic expression that has been uttered.

The vehicle state 231b stores information on the vehicle including, for example, an area, a vehicle speed, a time slot, a remaining fuel, a vehicle model, and information for indicating whether or not a route guidance for a recommended route or the like is in execution. The instruction target application 231c stores information for identifying the kind of the application software. The utterance information 231d stores the linguistic expression that has actually been uttered by the user in a text format.

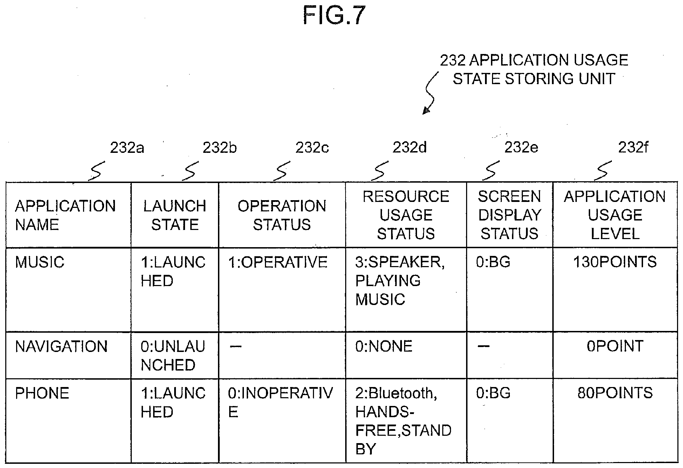

FIG. 7 is a table for showing a data structure of the application usage state storing unit 232. The application usage state storing unit 232 includes an application name 232a, a launch state 232b, an operation status 232c, a resource usage status 232d, a screen display status 232e, and an application usage level 232f.

The application name 232a stores information for identifying application software available on the voice input assistance device 200 or the peripheral device 300 connected thereto. The launch state 232b stores information for identifying whether or not the application software identified by the application name 232a is in a launched state.

The operation status 232c stores information for identifying whether or not the application software identified by the application name 232a is in an operative state.

The resource usage status 232d stores information for identifying a resource being used by the application software identified by the application name 232a. For example, the resource includes a speaker, Bluetooth (trademark), or other such wireless communication resource.

The screen display status 232e stores information for identifying a state of screen display of the application software identified by the application name 232a. For example, the state of the screen display includes a foreground (hereinafter referred to as "FG") indicating a state in which the screen is displayed and a background (hereinafter referred to as "BG") indicating a state in which the screen is not displayed.

The application usage level 232f stores information for identifying an application usage level being a value indicating a usage degree of the application software identified by the application name 232a. For example, the application usage level stores a value calculated by applying a predetermined calculation phrase through use of the information of the launch state 232b, the operation status 232c, the resource usage status 232d, and the screen display status 232e. The value of the application usage level is an index indicating, for each application, how often the application is used, and is a value indicating that the application is in a higher usage level as the application is used more frequently. Therefore, a calculation method therefor is not limited to the above-mentioned method, and it should be understood that the calculation may be conducted through use of another reference value from a viewpoint of other than that of the above-mentioned calculation method.

The shortened-phrase storing unit 233 has the same data structure as a data structure the shortened-phrase storing unit 132 shown in FIG. 5. That is, the shortened-phrase storing unit 233 includes the application name 132a, the serial number 132b, the instruction phrase 132c, the mildly-shortened instruction phrase 132d, and the intensely-shortened instruction phrase 132e. In regard to data within the shortened-phrase storing unit 233 and the operation instruction phrase, the operation instruction phrase and the shortened phrase for operating an application are added or deleted at a timing of adding or deleting the application. The present invention is not limited thereto, and a software tool for editing the data may be installed in the voice input assistance device 200, and may be operated by a system administrator or the user to update or delete the data. In another case, the data may be acquired when the voice input assistance device 200 downloads the data from the server apparatus 100 or other such external server apparatus through the network 15, or may be acquired through a universal serial bus (USB) memory or other such external storage device. A shortened phrase that is not included in the server apparatus 100 can also be uploaded onto the server apparatus 100 through the frequently-uttered phrase presentation unit 216 and added as the shortened phrase corresponding to the instruction phrase. In general, an overlap in the shortened phrase is likely to occur between operation instruction phrases as a degree of shortening of the operation instruction phrase becomes larger, and hence the shortened phrase is uploaded to be added after a plurality of shortened phrase candidates are generated to change the shortened phrase in order to avoid the overlap.

The description is continued with reference back to FIG. 3. The voice processing unit 211 is configured to receive a voice uttered by the user. The voice processing unit 211 is further configured to receive the vehicle information from the vehicle information acquisition unit 217. The voice processing unit 211 is configured to transmit the user-uttered voice, the shortened-phrase-applicable operation item list, and the vehicle information to the voice recognition unit 111 of the server apparatus 100. The shortened-phrase-applicable operation item list is information generated by the desirability estimation unit 214. The vehicle information is information for indicating the status of the vehicle, which includes an area (coordinates) in which the vehicle provided with the voice input assistance device 200 is located, a time slot, a vehicle speed, a remaining fuel, a vehicle model, and information for indicating whether or not a route guidance for a recommended route or the like is in execution.

The voice processing unit 211 is further configured to detect, when the voice input assistance device 200 includes a microphone switch configured to receive an instruction to receive the voice input through a microphone, the user's pressing of the microphone switch, and to detect any one of an utterance method display request, an utterance preparation request, and a display forwarding request based on a difference in pressing method and pressed position.

In this case, the utterance method display is to present what kind of utterance is to be given in order to conduct the voice operation. The utterance preparation is to start processing for receiving an uttered voice. The display forwarding is to change items included in "operation items having high desirabilities" described later.

The output processing unit 212 is configured to generate screen information to be presented to the user. In particular, the output processing unit 212 is configured to receive the utterance method (including the shortened phrase) from the desirability estimation unit 214, and to form and output the screen information so as to be presented to the user. In addition, it can be said that the output processing unit 212 is further configured to present an operable operation estimated to be desired by the desirability estimation unit 214 as an item that can be operated through use of an expression obtained by changing the degree of shortening depending on a desirability.

The software execution control unit 213 is configured to operate software that can operate on the voice input assistance device 200. The software execution control unit 213 is further configured to generate the display screen through use of information output by the software in operation.

The desirability estimation unit 214 is configured to acquire a plurality of frequently-uttered phrases that have been frequently uttered among frequent utterances presented by the frequently-uttered phrase presentation unit 216 described later, and estimate the desirability in accordance with the number of times of utterance. The desirability estimation unit 214 is further configured to acquire an operation item having an application usage level, which is calculated by the application usage level management unit 215 described later, and is equal to or higher than a predetermined level, and estimate the desirability based on the application usage level. In other words, it can be said that the desirability estimation unit 214 is configured to estimate a desired operation item and its degree. It can also be said that the desirability estimation unit 214 is further configured to estimate that the desirability of processing that is already in execution on the voice input assistance device 200 itself is higher than that of processing that is not in execution. It can also be said that the desirability estimation unit 214 is further configured to estimate that the desirabilities of processing that is already in execution on the voice input assistance device 200 itself and processing that is already in execution on any one of other devices connected to the voice input assistance device 200 itself are higher.

Now, a description is made of the desirability. The desirability is an index indicating, when the user is estimated to desire the instruction, a degree of intensity of the desire. For example, it can be said that, when knowing information that a long traffic jam has occurred ahead while traveling on an expressway, the user is highly likely to desire an instruction for a search for an alternative route including a route for leaving the expressway. It can also be said that the user is more likely to desire, for example, an instruction to change the volume while listening to music than while not listening to the music.

Now, a description is made of the application usage level. The application usage level is an index indicating a degree of importance of the application used by the user. The application usage level is calculated by a predetermined mathematical expression through use of an application usage level index obtained by converting indices of each piece of application software into numerical values, the indices including (1) a launch status, (2) a user operation status, (3) a resource usage status (microphone, speaker, communication channel, or the like), and (4) a relative screen display status between applications (FG or BG). It suffices that the mathematical expression is formed of the four rules of arithmetic or other such calculation rule, a weighting parameter for each application usage level index, and the like.

Specific examples of the mathematical expression to be used to calculate the application usage level include a mathematical expression having at least one of the above-mentioned indices (1) to (4) as a variable on the right side and having a score of the application usage level on the left side to be obtained by substituting the numerical value for the variable. For example, there is a mathematical expression for acquiring a predetermined score as the application usage level when each piece of application software is in the launched state and adding predetermined scores corresponding to the user operation status, the resource usage status, and the relative screen display status between the applications to the acquired predetermined score to calculate a final application usage level.

Further, the desirability estimation unit 214 is configured to identify the operation items estimated to have high desirabilities and the shortened phrases of the operation items so as to be output in the form of the shortened-phrase-applicable operation item list after being sorted in descending order of the highest operation item.

In this case, as a method of determining a rank of the desirability, it is conceivable to determine the rank based on a magnitude of any one of or a combined value of an utterance count, a score relating to the application usage level, a deviation value of the utterance count, and a deviation value of the score relating to the application usage level.

For example, both the operation item extracted from the frequently-uttered phrases and the operation item extracted from results of calculating the application usage level may be extracted as the operation items having high desirabilities. Output information may be generated so that the above-mentioned operation items are simultaneously displayed within a single display window within a single screen, or output information may be generated so that the above-mentioned operation items are simultaneously displayed within separate display windows within a single screen. In another case, the output information may be generated so that the above-mentioned operation items are respectively displayed on separate single screens at different timings (for example, when the frequently-uttered phrase is extracted and when the application usage level is calculated, respectively).

The application usage level management unit 215 is configured to receive the state of the application and the above-mentioned application usage level index from each application. The state of the application and the above-mentioned application usage level index may be received periodically, or may be received not periodically but with the pressing of the microphone switch or other such event being used as a trigger. The application usage level management unit 215 is further configured to refer to a controllable application list generated by the peripheral device connecting unit 240 described later to assume that a controllable application is in operation on a peripheral device when a name or an identifier of the controllable application exists in the above-mentioned list, and to receive the state of the application in operation on the peripheral device and the application usage level index.

The application usage level management unit 215 is further configured to identify an operation item executable in an application based on the state of the application.

The frequently-uttered phrase presentation unit 216 is configured to receive, from the server apparatus 100, information including a frequently-uttered phrase corresponding to the information for indicating the state of the vehicle and the count being the number of times that the frequently-uttered phrase has been uttered. The frequently-uttered phrase represents the uttered phrases having a large number of times of utterance among uttered phrases uttered by a plurality of users in a predetermined vehicle state.

The vehicle information acquisition unit 217 is configured to acquire information on the vehicle provided with the voice input assistance device 200, which includes a vehicle speed, positional information, a remaining fuel, a time slot, and other such information, from sensors or other such devices relating thereto.

The parallel execution unit 218 is configured to identify an operation instruction phrase for reversible processing, that is, processing whose state is not changed when being executed and which causes no contradiction when being executed again, from among the operation instruction phrases having high desirabilities estimated by the desirability estimation unit 214, and to transmit the operation instruction phrase to each application, to thereby parallelly control preceding execution of the application.

The communication unit 220 is configured to communicate to/from another device connected to the network 15, for example, the Internet.

The peripheral device connecting unit 240 is configured to, for example, establish, maintain, and abort communications between the voice input assistance device 200 and the peripheral device 300 connected thereto. The peripheral device connecting unit 240 communicates to/from and connects to the peripheral device 300 through short-range wireless communications, for example, Bluetooth, a wireless LAN, or NFC or wired communications using a communication cable, for example, a USB or an HDMI. The peripheral device connecting unit 240 is further configured to acquire, when application software executed on the connected peripheral device 300 is configured to receive an operation from the voice input assistance device 200, a name and the like of the application software and acquire an operation item thereof.

An outline of the configuration of the voice input assistance device 200 has been described above. The voice input assistance device 200 is typically a navigation device to be mounted on a vehicle, but the present invention is not limited thereto, and the voice input assistance device 200 may be a mobile device, a personal computer device, a mobile phone terminal, a tablet terminal, a PDA, or other such electronic information terminal.

The peripheral device 300 includes a control unit 310 and a peripheral device connecting unit 340. The control unit 310 includes an input reception unit 311, an output processing unit 312, an information terminal communication unit 313, and an application management unit 314.

The input reception unit 311 is configured to receive information relating to a pressing, releasing, or moving operation or other such screen operation from among pieces of pointing information transmitted from a touch panel provided to a screen included in the peripheral device 300.

The output processing unit 312 is configured to display a screen relating to software operating on the voice input assistance device 200 and the peripheral device 300. The information terminal communication unit 313 is configured to exchange information with the voice input assistance device 200.

The application management unit 314 is configured to operate software that can operate on the peripheral device 300. The application management unit 314 is further configured to generate the display screen through use of the information output by the operated software. The application management unit 314 is further configured to output the name of the application software executed on the peripheral device 300 and the operation item for which an operation can be received by the voice input assistance device 200 to the voice input assistance device 200 connected through the peripheral device connecting unit 340.

The peripheral device connecting unit 340 is configured to, for example, establish, maintain, and abort communications between the voice input assistance device 200 and the peripheral device 300 connected thereto. The peripheral device connecting unit 340 communicates to/from and connects to the voice input assistance device 200 through short-range wireless communications, for example, Bluetooth, a wireless LAN, or NFC or wired communications using a communication cable, for example, a USB or an HDMI. The peripheral device connecting unit 340 is configured to pass, when the application software executed on the peripheral device 300 is configured to receive an operation from the voice input assistance device 200, the name, the operation item, and the like of the application software to the connected voice input assistance device 200.

An outline of the configuration of the peripheral device 300 has been described above. The peripheral device 300 is typically a mobile phone terminal, but the present invention is not limited thereto, and the peripheral device 300 may be a navigation device, a personal computer device, a mobile phone terminal, a tablet terminal, a PDA, or other such electronic information terminal.

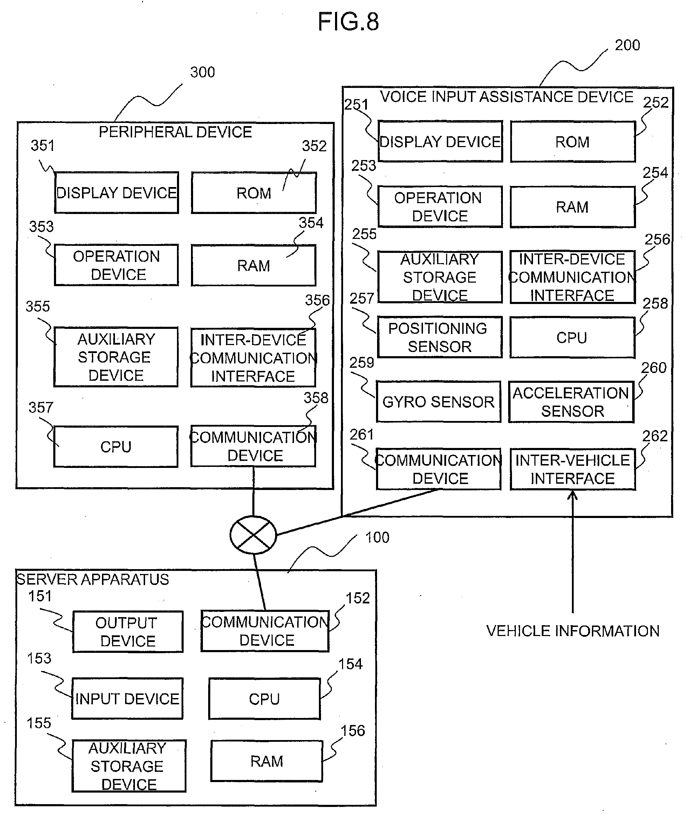

FIG. 8 is a diagram for illustrating hardware configurations of the respective devices that form the voice input assistance system 1. The server apparatus 100 includes: an output device 151, for example, a display; a communication device 152, for example, a network card; an input device 153, for example, a keyboard; a central processing unit (CPU) 154; an auxiliary storage device 155, for example, a hard disk drive (HDD) or a solid state drive (SSD); and a random access memory (RAM) 156.

The output device 151 is a display device, for example, a display, and is configured to display a result of processing conducted by the CPU 154. The communication device 152 is connected to the network 15, for example, the Internet, and is configured to exchange various kinds of data with another device connected to the network 15.

The input device 153 is a touch panel, a keyboard, a mouse, or the like, and is configured to receive an instruction from the user.

The CPU 154 is a control unit configured to conduct an arithmetic operation based on a program loaded onto the RAM 156.

The auxiliary storage device 155 is a storage device configured to store various kinds of data to be used for a program.

The RAM 156 is a memory device configured to load a program stored in the auxiliary storage device 155. The RAM 156 is further configured to temporarily store data.

The control unit 110 of the server apparatus 100 described above is implemented by a program for causing the CPU 154 to conduct processing. This program is stored in the auxiliary storage device 155, loaded onto the RAM 156 before being executed, and executed by the CPU 154.

The communication unit 120 is implemented by the communication device 152. The storage unit 130 is implemented by the auxiliary storage device 155 or the RAM 156.

An example of the hardware configuration of the server apparatus 100 according to this embodiment has been described above. However, the present invention is not limited thereto, and the server apparatus 100 may be configured through use of other similar pieces of hardware.

The voice input assistance device 200 includes a display device 251, a ROM 252, an operation device 253, a RAM 254, an auxiliary storage device 255, an inter-device communication interface 256, a positioning sensor 257, a CPU 258, a gyro sensor 259, an acceleration sensor 260, a communication device 261, and an inter-vehicle interface 262.

The display device 251 is a liquid crystal display, an organic EL display, or other such device configured to display image information.

The ROM 252 is a read-only memory device to which a control program or the like is written.

The operation device 253 is a device configured to receive an operation from the user, which includes a button, a switch, a keyboard, and a touch panel used for operating the voice input assistance device 200 through a contact operation of a finger or other such operation.

The RAM 254 is a memory device configured to load a program stored in the auxiliary storage device 255 and to temporarily store data.

The auxiliary storage device 255 is a storage device configured to store various kinds of data used for software.

The inter-device communication interface 256 is connected to the peripheral device 300, and is configured to transmit and receive data. A connection method employed by the inter-device communication interface 256 may be wired connection compatible with a standard of a USB, an HDMI, or the like, or may be wired connection compatible with a standard of IEEE 802.11a/-b/g/n/ac of the wireless LAN, Bluetooth, or the like.

The positioning sensor 257 is a sensor configured to identify a position, and to output the position in a coordinate system based on latitude and longitude.

The CPU 258 is a control unit configured to control each unit of the voice input assistance device 200, and to conduct an arithmetic operation based on the program loaded onto the RAM 254.

The gyro sensor 259 is a sensor for measuring an angle and an angular velocity of the vehicle provided with the voice input assistance device 200 in a horizontal direction.

The acceleration sensor 260 is a sensor for measuring a multi-axis acceleration relating to the vehicle provided with the voice input assistance device 200.

The communication device 261 is connected to the network 15, for example, the Internet, through use of a wireless communication line network, and is configured to transmit and receive various kinds of data to/from a device connected to the network 15.

The inter-vehicle interface 262 is an interface for connection to a vehicle signal line, and is capable of capturing a vehicle traveling state and an internal state (for example, information including the vehicle speed, the remaining fuel, the position, and the time slot). The inter-vehicle interface 262 may also be connected to a control area network (CAN) being a network within a vehicle, and may be configured to transmit and receive control information including vehicle speed information on the vehicle.

The control unit 210 of the voice input assistance device 200 described above is implemented by a program for causing the CPU 258 to conduct processing. This program is stored in the auxiliary storage device 255, loaded onto the RAM 254 before being executed, and executed by the CPU 258.

Further, the communication unit 220 is implemented by the communication device 261. The storage unit 230 is implemented by the auxiliary storage device 255 or the RAM 254. Further, the peripheral device connecting unit 240 is implemented by the inter-device communication interface 256.

An example of the hardware configuration of the voice input assistance device 200 according to this embodiment has been described above. However, the present invention is not limited thereto, and the voice input assistance device 200 may be configured through use of other similar pieces of hardware.

The peripheral device 300 includes a display device 351, a ROM 352, an operation device 353, a RAM 354, an auxiliary storage device 355, an inter-device communication interface 356, a CPU 357, and a communication device 358.

The display device 351 is a liquid crystal display, an organic electro-luminescence (EL) display, or other such device configured to display image information.

The ROM 352 is a read-only memory device to which a control program or the like is written.

The operation device 353 is a device configured to receive an operation from the user, which includes a button, a switch, a keyboard, and a touch panel used for operating the peripheral device 300 through a contact operation of a finger or other such operation.

The RAM 354 is a memory device configured to load a program stored in the auxiliary storage device 355 and to temporarily store data.

The auxiliary storage device 355 is a storage device configured to store various kinds of data used for software.

The inter-device communication interface 356 is connected to the voice input assistance device 200, and is configured to transmit and receive data. The connection method employed by the inter-device communication interface 356 may be the wired connection compatible with the standard of a USB, an HDMI, or the like, or may be the wired connection compatible with the standard of IEEE 802.11a/b/g/n/ac of the wireless LAN, Bluetooth, or the like.

The CPU 357 is a control unit configured to control each unit of the peripheral device 300, and to conduct an arithmetic operation based on the program loaded onto the RAM 354.

The communication device 358 is connected to the network 15, for example, the Internet, through use of the wireless communication line network, and is configured to transmit and receive various kinds of data to/from a device connected to the network 15.

The control unit 310 of the peripheral device 300 described above is implemented by a program for causing the CPU 357 to conduct processing. This program is stored in the auxiliary storage device 355, loaded onto the RAM 354 before being executed, and executed by the CPU 357.

Further, the peripheral device connecting unit 340 is implemented by the inter-device communication interface 356.

An example of the hardware configuration of the peripheral device 300 according to this embodiment has been described above. However, the present invention is not limited thereto, and the peripheral device 300 may be configured through use of other similar pieces of hardware.

### [Description of Operation]

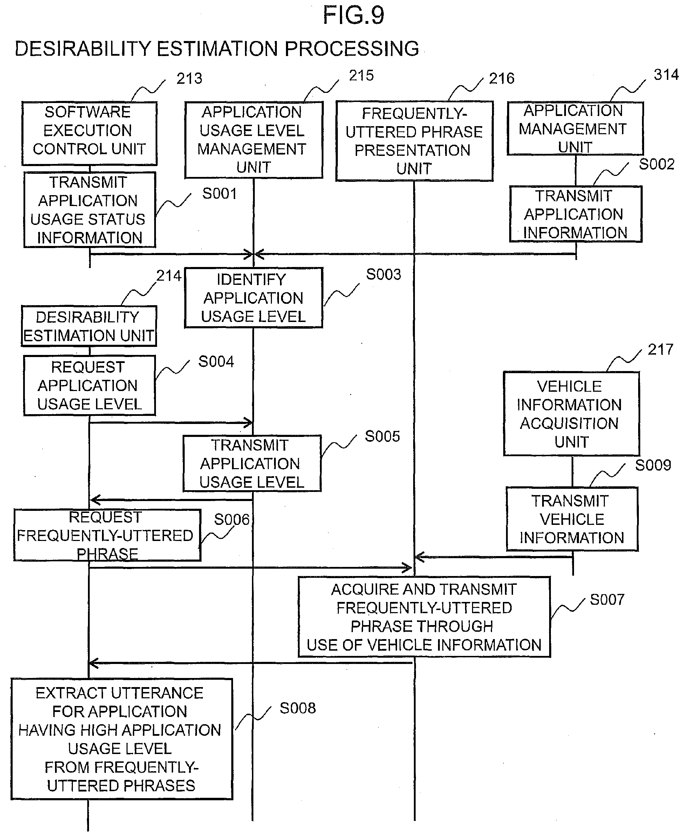

Next, an operation of desirability estimation processing conducted in this embodiment is described with reference to FIG. 9.

FIG. 9 is a diagram for illustrating processing contents of the desirability estimation processing. The desirability estimation processing is connected when the voice input assistance device 200 and the peripheral device 300 are connected to the server apparatus 100. The desirability estimation processing is conducted irrespective of whether or not the peripheral device 300 is connected, and in that case, the voice input assistance device 200 can ignore an occurrence of an error due to the fact that information cannot be obtained from the peripheral device 300.

First, the software execution control unit 213 transmits application usage status information to the application usage level management unit 215 (Step S001). Specifically, the software execution control unit 213 transmits the name of the application software in execution, the launch state, the operation status, the resource usage status, and the screen display status to the application usage level management unit 215. This processing is assumed to be executed at an arbitrary timing. For example, the processing may be periodically executed, or may be executed when a predetermined event occurs.

Further, the application management unit 314 of the peripheral device 300 transmits the application usage status information when the peripheral device 300 is connected to the voice input assistance device 200 (Step S002). Specifically, the application management unit 314 transmits the name of the application software in execution on the peripheral device 300, the launch state, the operation status, the resource usage status, and the screen display status to the application usage level management unit 215. This processing is assumed to be executed at an arbitrary timing. For example, the processing may be periodically executed, or may be executed when a predetermined event occurs.

Then, the application usage level management unit 215 identifies the application usage level (Step S003). Specifically, the application usage level management unit 215 identifies a usage level for each piece of application software through use of the application usage status information transmitted in Step S001 and Step S002. In the processing for identifying the application usage level, the application usage level management unit 215 calculates and identifies the application usage level by summing up the scores based on the information on the application usage level index described above.

Then, the desirability estimation unit 214 requests the application usage level from the application usage level management unit 215 at a predetermined timing (Step S004). The timing may be, for example, a periodic one, one based on a predetermined schedule, or one based on an occurrence of a predetermined event.

When receiving the request for the application usage level issued in Step S004, the application usage level management unit 215 transmits the application usage level (Step S005). Specifically, the application usage level management unit 215 transmits information obtained by associating the application usage level identified in Step S003 with the name of the application software to the desirability estimation unit 214.

Then, the desirability estimation unit 214 requests the frequently-uttered phrase from the frequently-uttered phrase presentation unit 216 at a predetermined timing (Step S006). The timing may be, for example, a periodic one, one based on a predetermined schedule, or one based on the occurrence of a predetermined event.

The frequently-uttered phrase presentation unit 216 acquires and transmits the frequently-uttered phrase through use of the vehicle information transmitted (in Step S009 described later) from the vehicle information acquisition unit 217 to the frequently-uttered phrase presentation unit 216 at a predetermined timing (Step S007). Specifically, the frequently-uttered phrase presentation unit 216 identifies an utterance given in a situation in which each piece of information within the vehicle information is similar and its count, and transmits the utterance and its count to the desirability estimation unit 214. In the processing for identifying the frequent utterance and its count, the frequently-uttered phrase presentation unit 216 transmits the vehicle information including the area, the time slot, the remaining fuel, the vehicle speed, the vehicle model, and information for indicating whether or not a route guidance for a recommended route or the like is in execution to the frequently-uttered phrase identification unit 113 of the server apparatus 100, and acquires a returned uttered phrase and a returned utterance count. Then, the frequently-uttered phrase presentation unit 216 transmits the acquired uttered phrase and the acquired utterance count to the desirability estimation unit 214. In other words, it can be said that the desirability estimation unit 214 is configured to estimate the desirability through use of a track record of utterance given in a situation in which the status of the vehicle on which the voice input assistance device 200 is mounted is similar to the status of another vehicle.

Then, the desirability estimation unit 214 extracts an utterance for an application having a high application usage level from the frequently-uttered phrases (Step S008). Specifically, the desirability estimation unit 214 extracts a frequently-uttered phrase relating to application software having a high application usage level from among the frequently-uttered phrases acquired in Step S007, and generates screen information to be presented to the user.

The vehicle information acquisition unit 217 transmits the vehicle information to the frequently-uttered phrase presentation unit 216 at timings synchronized with those steps of the desirability estimation processing or an autonomous timing (Step S009).

The flow of the desirability estimation processing has been described above. According to the desirability estimation processing, an instruction phrase having a high importance of the usage of the application software can be extracted from among the instruction phrases for the application software, which have been frequently uttered in a situation involving similar vehicle statuses, and can be presented to the user. It can be said that the above-mentioned processing allows an instruction of the user to be precedingly estimated based on a context.

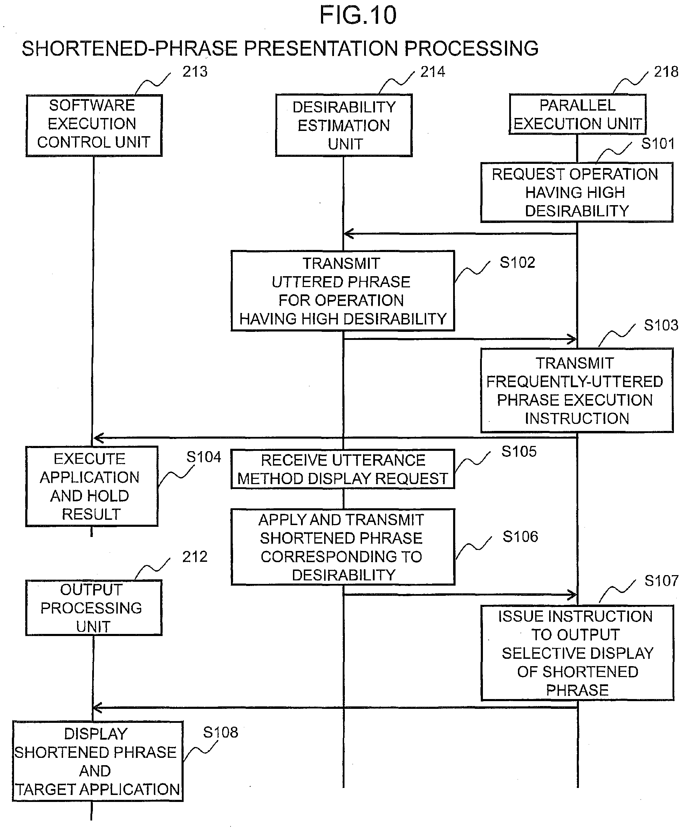

FIG. 10 is a diagram for illustrating a processing flow of shortened-phrase presentation processing. In the shortened-phrase presentation processing, uttered phrases for operations having high desirabilities are executed in parallel before an uttered instruction is received. With this processing, a result thereof can be acquired earlier than a case in which the execution is started after the instruction is received, and it is possible to obtain an apparent response speed for the user. In another case, the shortened-phrase presentation processing may be executed with a trigger of an event that causes a change of an operation item having a high desirability.

First, the parallel execution unit 218 requests an uttered phrase for an operation having a high desirability from the desirability estimation unit 214 (Step S101). Then, the desirability estimation unit 214 transmits the uttered phrase for an operation having a high desirability, which is extracted in Step S008 of the desirability estimation processing, to the parallel execution unit 218 (Step S102).

The parallel execution unit 218 transmits a frequently-uttered phrase execution instruction to the software execution control unit 213 (Step S103). Specifically, the parallel execution unit 218 transmits, to the software execution control unit 213, an execution instruction for a predetermined number of uttered phrases for operations having high desirabilities received in Step S102. In the above-mentioned processing, the parallel execution unit 218 instructs to execute cancelable processing, that is, a search, reference, or other such processing that does not involve a change of data, and excludes execution of uncancelable processing, that is, an update, deletion, or other such processing that involves a change of data.

The software execution control unit 213 executes the application software, and holds a result thereof (Step S104). Specifically, the software execution control unit 213 executes an operation of the software relating to the frequently-uttered phrase whose execution has been instructed by a parallel execution unit 218, and caches a result thereof. After that, the cached result is passed as the processing result in response to the execution instruction having the same contents.

Further, the desirability estimation unit 214 receives the utterance method display request (Step S105). The above-mentioned request to be received is transmitted by an operating system (not shown) or the like of the voice input assistance device 200 which has detected, for example, the pressing of a predetermined operation button of the microphone switch.

Then, the desirability estimation unit 214 applies and transmits the shortened phrase corresponding to the desirability (Step S106). Specifically, the desirability estimation unit 214 identifies a shortened phrase having a large degree of shortening for an utterance for an operation having a high desirability for each of the uttered phrases for operations having high desirabilities, applies the shortened phrase as the shortened phrase, and transmits the shortened phrase to the parallel execution unit 218.

Then, the parallel execution unit 218 issues an instruction to output selective display of the shortened phrase (Step S107). Specifically, the parallel execution unit 218 subjects the shortened phrase transmitted in Step S106 to such screen formation as to allow the user to understand and utter the shortened phrase. The parallel execution unit 218 includes, on the screen to be formed, at least the shortened phrase and information for indicating which application software involves the operation instruction phrase shortened by the shortened phrase. Then, the screen information on the formed screen is transmitted to the output processing unit 212.

The output processing unit 212 displays the shortened phrase and the target application software (Step S108). Specifically, the output processing unit 212 displays the screen information transmitted in Step S107. When an operable item has the same expression as that of another operable item, the output processing unit 212 changes the degree of shortening to cause an expression thereof to differ, and expresses the phrase by highlighting (for example, underlining) a different point.

The flow of the shortened-phrase presentation processing has been described above. According to the shortened-phrase presentation processing, it is possible to present, to the user, a shortened phrase having a larger degree of shortening for an operation having a higher desirability. This allows the user to give an operation instruction briefly by uttering the shortened phrase.

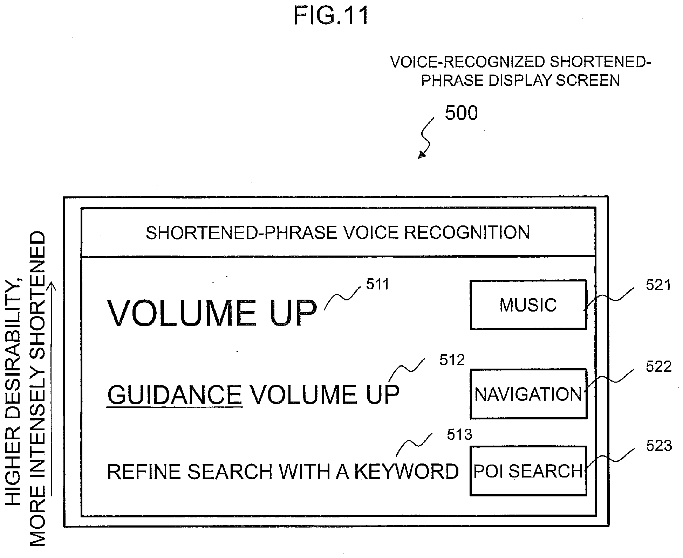

FIG. 11 is a diagram for illustrating an example of a voice-recognized shortened-phrase display screen. On a voice-recognized shortened-phrase display screen 500, a plurality of shortened phrases of the operation instruction phrases and a plurality of pieces of auxiliary information indicating the kind of the application software are displayed in a one-to-one association in descending order of the desirability. For example, a "volume up" display field 511, a "guidance volume up" display field 512, and a "refine search with a keyword" display field 513 are displayed in the left column as one faces the screen along a vertically downward direction. Characters in each display field having a higher desirability are highlight-displayed in a larger size. In addition, the degree of shortening is larger for a higher desirability. It is assumed that an intensely-shortened operation instruction phrase is described in the "volume up" display field 511 having the highest desirability, a mildly-shortened operation instruction phrase is subsequently described in the "guidance volume up" display field 512, and an operation instruction phrase that is not shortened is described in the "refine search with a keyword" display field 513. In the right column as one faces the screen, pieces of auxiliary information 521, 522, and 523 of "music", "navigation", "POI search" are displayed in association with the "volume up" display field 511, the "guidance volume up" display field 512, and the "refine search with a keyword" display field 513, respectively. With this display, it is indicated that an operation instruction relating to a "music" function is described in the "volume up" display field 511. In the same manner, it is indicated that an operation instruction relating to a "navigation" function is described in the "guidance volume up" display field 512. It is also indicated that an operation instruction relating to a "POI search" function is described in the "refine search with a keyword" display field 513.

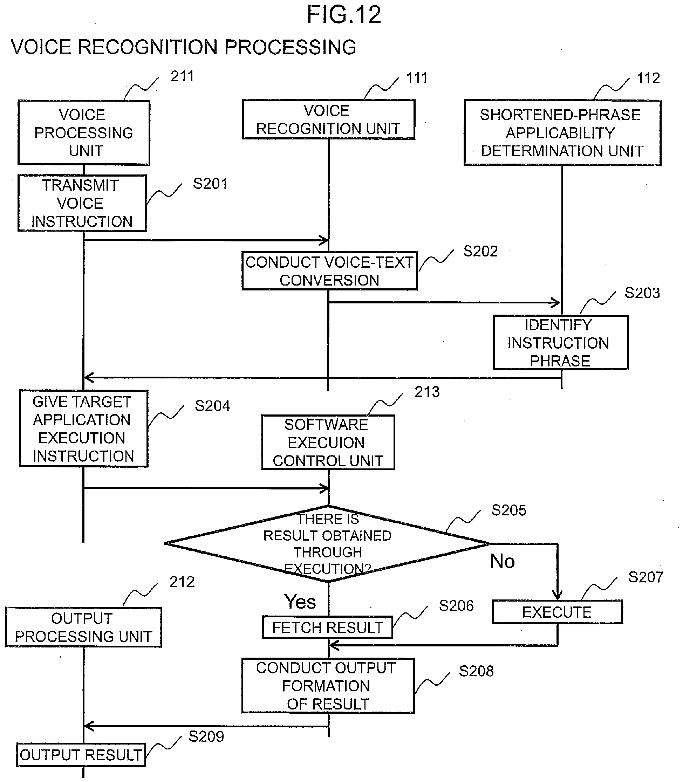

FIG. 12 is a diagram for illustrating a processing flow of voice recognition processing. The voice recognition processing is started when a voice input instruction is given by the user through the microphone switch or the like.

The voice processing unit 211 transmits a voice instruction to the voice recognition unit 111 of the server apparatus 100 (Step S201).

Then, the voice recognition unit 111 analyzes the transmitted voice instruction, and conducts voice-text conversion (Step S202). Then, the voice recognition unit 111 transmits a result of the conversion to the shortened-phrase applicability determination unit 112.

When receiving text information being the transmitted result of the voice-text conversion, the shortened-phrase applicability determination unit 112 identifies the instruction phrase (Step S203). Specifically, the shortened-phrase applicability determination unit 112 refers to the shortened-phrase storing unit 132 to identify which operation instruction phrase the uttered shortened phrase relates to. Then, the shortened-phrase applicability determination unit 112 transmits the identified instruction phrase to the voice processing unit 211 of the voice input assistance device 200.

The voice processing unit 211 gives a target application execution instruction (Step S204). Specifically, the voice processing unit 211 causes the software execution control unit 213 to execute the application software to be operated by the instruction phrase and its operation instruction.

The software execution control unit 213 determines whether or not there is a result obtained through the execution of the instructed operation (Step S205). Specifically, the software execution control unit 213 determines whether or not there is a cache involved in the,execution conducted in Step S104 of the shortened-phrase presentation processing.

When there is a result of execution of the instructed operation (when "Yes" in Step S205), the software execution control unit 213 fetches the result (Step S206).

When there is no result of execution of the instructed operation (when "No" in Step S205), the software execution control unit 213 executes the application software (Step S207). Specifically, the software execution control unit 213 obtains a result of executing an operation of the application software whose execution is instructed in Step S204. The software execution control unit 213 may be configured to launch, when the operation to be executed is an operation on unlaunched application software, the application software and execute the operation, or may be configured to issue, when the operation to be executed is an operation for ending the launched application software, an instruction to end the processing in execution to the application software.

Then, the software execution control unit 213 conducts output formation of the result (Step S208). Specifically, the software execution control unit 213 passes output information obtained as a result of executing the application software to the output processing unit 212 as information on the output of the result.

The output processing unit 212 outputs the formed output information (Step S209). Specifically, the output processing unit 212 outputs an output screen formed in Step S208.

The processing flow of the voice recognition processing has been described above. According to the voice recognition processing, it is possible to conduct the operation correctly even when the voice operation is conducted by the shortened phrase. When there exists a result of the preceding parallel execution before the utterance, it is also possible to increase responsiveness by obtaining the above-mentioned result.

The first embodiment has been described above. According to the first embodiment, the operation can be conducted through use of words shortened more for an operation item estimated to be desired stronger.

In the first embodiment, the shortened-phrase applicability determination unit 112, the voice recognition unit 111, and the shortened-phrase storing unit 132 are provided to the server apparatus 100, but the present invention is not limited thereto. For example, those units may be provided to the voice input assistance device 200.

Further, in the desirability estimation processing, the processing for extracting the utterance for the application having a high application usage level from the frequently-uttered phrases and outputting the utterance is conducted in Step S008, but the present invention is not limited thereto. For example, the uttered phrases for the applications having high application usage levels and the uttered phrases extracted as the frequently-uttered phrases may be simply listed in descending order of the desirability irrespective of an overlap. For example, the uttered phrases having high desirabilities among the utterances for the applications having high application usage levels and the uttered phrases having high desirabilities among the frequently-uttered phrases may be displayed so as to coexist.

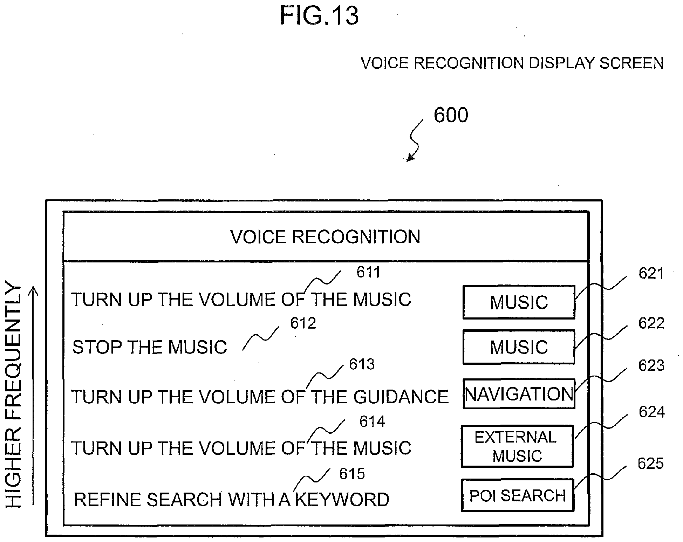

FIG. 13 is a diagram for illustrating an example of a voice recognition display screen. A voice recognition display screen 600 is an output example thus obtained by simply listing the uttered phrases in descending order of the desirability irrespective of an overlap. On the voice recognition display screen 600, a plurality of operation instruction phrases and a plurality of pieces of auxiliary information for indicating the kinds of the application software are displayed in a one-to-one association in descending order of the desirability. For example, a "turn up the volume of the music" operation display field 611, a "stop the music" operation display field 612, a "turn up the volume of the guidance" operation display field 613, a "turn up the volume of the music" operation display field 614, and a "refine search with a keyword" operation display field 615 are displayed in the left column as one faces the screen along the vertically downward direction. In addition, the operation instruction phrase having the highest desirability of the frequently-uttered phrase is described in the "turn up the volume of the music" operation display field 611, and the operation instruction phrase having the highest application usage level is described in the "stop the music" operation display field 612. In the same manner, the operation instruction phrase having the second highest desirability of the frequently-uttered phrase is described in the "turn up the volume of the guidance" operation display field 613, and the operation instruction phrase having the second highest application usage level is described in the "turn up the volume of the music" operation display field 614. Further, the operation instruction phrase having the third highest desirability of the frequently-uttered phrase is described in the "refine search with a keyword" operation display field 615.

In the right column as one faces the screen on the voice recognition display screen 600, pieces of auxiliary information 621, 622, 623, 624, and 625 of "music", "music" "navigation", "external music", "POI search", respectively, are displayed.

Further, the utterance track record storing unit 131 may be configured so that an indefinite operation, which is provided to any kind of application software, may be eliminated from registration by a blacklist in advance. For example, a paging operation of "next" or "return", "next candidate", "(choose option) 3", or other such operation is an operation common to a large number of pieces of software, and is not assumed to have high adequacy as an operation phrase for identifying substantially what kind of operation has been conducted. Therefore, a processing unit configured to register such an operation phrase so as to be excluded from an utterance track record in advance may also be provided. With this configuration, the utterances to be accumulated are improved in quality, and it is possible to identify the frequently-uttered phrase more appropriately.

Control lines and information lines that are assumed to be necessary for the sake of description of the first embodiment are illustrated, but not all the control lines and the information lines involved in a product are illustrated. In actuality, it may be considered that almost all the components are connected to one another.

Further, in regard to each of the above-mentioned configurations, functions, processing units, and the like, a part thereof or an entirety thereof may be achieved by hardware, for example, by being designed as an integrated circuit. Further, technical elements of the above-mentioned embodiment may be applied alone, or may be applied by being divided into a plurality of portions such as program parts and hardware parts.

The embodiment of the present invention has been mainly described above.

### Reference Signs List

1 ··· voice input assistance system, 10 ··· user, 15 ··· network, 100 ··· server apparatus, 110 ··· control unit, 111 ··· voice recognition unit, 112 ··· shortened-phrase applicability determination unit, 113 ··· frequently-uttered phrase identification unit, 114 ··· various-service processing unit, 115 ··· uttered phrase accumulation unit, 120 ··· communication unit, 130 ··· storage unit, 131 ··· utterance track record storing unit, 132 ··· shortened-phrase storing unit, 133 ··· voice recognition information storing unit, 200 ··· voice input assistance device, 210 ··· control unit, 211 ··· voice processing unit, 212 ··· output processing unit, 213 ··· software execution control unit, 214 ··· desirability estimation unit, 215 ··· application usage level management unit, 216 ··· frequently-uttered phrase presentation unit, 217 ··· vehicle information acquisition unit, 218 ··· parallel execution unit, 220 ··· communication unit, 230 ··· storage unit, 231 ··· operation instruction phrase storing unit, 232 ··· application usage state storing unit, 233 ··· shortened-phrase storing unit, 240 ··· peripheral device connecting unit, 300 ··· peripheral device, 310 ··· control unit, 311 ··· input reception unit, 312 ··· output processing unit, 313 ··· information terminal communication unit, 314 ··· application management unit, 340 ··· peripheral device connecting unit

## Claims

1. A voice input assistance device, comprising:
a shortened-phrase storing unit configured to store an operation item and a shortened phrase corresponding to a desirability of the operation item in association with each other;
a desirability estimation unit configured to estimate the desirability of each operation item through use of a predetermined index, and to identify the shortened phrase from the shortened-phrase storing unit based on the desirability; and
an output processing unit configured to present the shortened phrase identified by the desirability estimation unit.

2. A voice input assistance device according to claim 1, wherein the desirability estimation unit is configured to collect a state of a vehicle to which the voice input assistance device is mounted, and to estimate the desirability through use of a track record of an utterance given in another vehicle in a state similar to the collected state of the vehicle.

3. A voice input assistance device according to claim 1, wherein the desirability estimation unit is configured to:
collect a state of a vehicle to which the voice input assistance device is mounted, and to estimate the desirability through use of a track record of an utterance given in another vehicle in a state similar to the collected state of the vehicle; and
determine similarity by using, as the state of the vehicle, an index of at least any one of an area, a time slot, a vehicle speed, a remaining fuel, a vehicle model, and information for indicating whether or not a route guidance for a recommended route or the like is in execution.

4. A voice input assistance device according to claim 1, wherein the desirability estimation unit is configured to estimate that the desirability relating to processing having a high frequency of use on the voice input assistance device is high.

5. A voice input assistance device according to claim 1, wherein the desirability estimation unit is configured to estimate that the desirability relating to processing having a high frequency of use on any one of the voice input assistance device and a device connected to the voice input assistance device is high.

6. A voice input assistance device according to claim 1, wherein the desirability estimation unit is configured to:
estimate that the desirability relating to processing having a high frequency of use on the voice input assistance device is high; and
identify the usage degree through use of an index of at least any one of a launch status, a user's operation status, a resource usage status, and a relative screen display status for each piece of processing in order to calculate the processing having a high frequency of use.

7. A voice input assistance device according to claim 1, wherein the desirability estimation unit is configured to set a larger degree of shortening for the operation estimated to be desired stronger.

8. A voice input assistance device according to claim 1, wherein the desirability estimation unit is configured to extract at least a noun or a verb from a name of the operation item for the operation estimated to be desired, and to set the at least the noun or the verb as the shortened phrase.

9. A voice input assistance device according to claim 1, wherein the desirability estimation unit is configured to extract a phrase representing a manner of an action from a name of the operation item for the operation estimated to be desired, and to set the phrase as the shortened phrase.

10. A voice input assistance device according to claim 1, wherein, when one operation item has the same expression as an expression of the shortened phrase of another operation item in processing for presenting the shortened phrase of the operation item, the desirability estimation unit changes a degree of shortening of the one operation item to cause an expression of the one operation item to differ, and to identify a highlighted expression of a different point along with the shortened phrase.

11. A voice input assistance device according to claim 1, further comprising a shortened-phrase applicability determination unit configured to identify, when receiving voice input relating to the operation item subjected to shortening, an operation relating to the corresponding operation item.

12. A voice input assistance device according to claim 1, further comprising a parallel execution unit configured to execute any one of operations relating to operation items estimated to be desired by the desirability estimation unit in advance even without receiving an operation instruction for the one of operations.

13. A voice input assistance system, comprising:
a server apparatus; and
a voice input assistance device communicably connected to the server apparatus, wherein:
the server apparatus comprises:
an utterance track record storing unit configured to store a track record of utterance information in association with a state of a vehicle to which the voice input assistance device belongs;
an uttered phrase accumulation unit configured to acquire the utterance information from the voice input assistance device along with information for indicating the state of the vehicle to which the voice input assistance device belongs, and to accumulate the utterance information and the information for indicating the state of the vehicle in the utterance track record storing unit; and
a frequently-uttered phrase identification unit configured to extract, when receiving the information for indicating the state of the vehicle from the voice input assistance device, the utterance information having a high utterance frequency, which is associated with the state of the vehicle, from the utterance track record storing unit, and to transmit the utterance information to the voice input assistance device; and
the voice input assistance device comprises:
a shortened-phrase storing unit configured to store an operation item and a shortened phrase corresponding to a desirability of the operation item in association with each other;
a desirability estimation unit configured to transmit the information for indicating the state of the vehicle to the server apparatus, to estimate the utterance information having a high utterance frequency, which is transmitted from the server apparatus, and the utterance frequency as a desired operation item and the desirability of the desired operation item, respectively, and to identify the shortened phrase from the shortened-phrase storing unit based on the desirability; and
an output processing unit configured to present the shortened phrase identified by the desirability estimation unit.

14. A voice input method, which is conducted through use of a voice input assistance device,
the voice input assistance device comprising:
a shortened-phrase storing unit configured to store an operation item and a shortened phrase corresponding to a desirability of the operation item in association with each other; and
a control unit,
the voice input method, which is conducted by the control unit, comprising:
a desirability estimation step of estimating the desirability of each operation item through use of a predetermined index, and identifying the shortened phrase from the shortened-phrase storing unit based on the desirability; and
an output processing step of presenting the shortened phrase identified in the desirability estimation step.
